# EUROPEAN PATENT SPECIFICATION

(11) **EP 1 912 192 B1**
(45) Date of publication and mention of the grant of the patent: **03.06.2009**
(21) Application number: 06425687.8
(22) Date of filing: 09.10.2006
(51) Int. Cl.: G08G 1/16, B60W 50/08, B60Q 1/52

(54) **Driving assistance system**
Fahrer-Assistenzsystem
Système d'assistance de conduite

(43) Date of publication of application: 16.04.2008
(73) Proprietor: Magneti Marelli S.p.A., 20011 Corbetta (MI) (IT)
(72) Inventor: Ghisio, Guido, 10078 Venaria Reale (Torino) (IT)
(74) Representative: Deambrogi, Edgardo

(56) References cited:
- EP-A- 1 531 112
- EP-A1- 1 426 906
- EP-A2- 0 637 525
- WO-A-20/06037691

## Description

The present invention relates to vehicle driving assistance systems, and more specifically to a system comprising a signalling arrangement adapted to assume a warning state to signal to the driver a hazardous driving condition requiring a manoeuvre or the actuation of a system of the vehicle.

In recent years, the progress achieved in the field of passive safety and the fitting of active safety systems to vehicles has contributed to a considerable improvement in road safety.

In order to achieve a further reduction in dangerous situations and achieve an improved driving comfort, driving assistance systems are being developed to assist the driver in manoeuvres and in all difficult driving situations which may occur on the road, by predicting possible hazard situations.

The preventive safety functions provided by these systems include the longitudinal monitoring of the vehicle, comprising the monitoring of the driving speed of the vehicle and the detection of obstacles in front of it, and the lateral monitoring of the vehicle, comprising the monitoring of the vehicle in case of any departure from the driving lane or the identification of other vehicles which are in the course of overtaking.

These systems are arranged to inform the driver of the need to adapt his speed or driving trajectory, using various information channels, such as visual indications, acoustic signals, and tactile or "haptic" signals.

For example, a system for keeping the vehicle in its driving lane (known as "Lane Departure Warning") includes the warning of the crossing or imminent crossing of the driving lane demarcation lines if this crossing is unintentional, in other words if the change of lane has not been announced by operating the appropriate direction indicator, by acoustic means or by providing the driver with a tactile sensation (haptic feedback) in the form of torque on the steering wheel which produces a sensation of resistance to the crossing of the lane demarcation lines and "suggests" the appropriate steering action to be taken to return or keep the vehicle into the driving lane.

In a lane change support system, for example one for assistance during an overtaking manoeuvre, sensors are provided for checking the side and rear area of the vehicle ("blind spot") in order to identify other vehicles already in the course of overtaking and decrease the risk of collision where visibility is limited. In this case, the signalling is typically provided by visual interfaces, such as LEDs positioned on the rear view mirrors, and/or by acoustic signalling, but haptic feedbacks to the steering wheel can also be considered, such as signalling by vibration or the generation of a resistive torque opposing to the hazardous manoeuvre, as used in a Lane Departure Warning system.

Additionally, in a support system for safe distance maintenance intended to prevent collisions, if the speed of the vehicle is considered excessive and potentially dangerous the driver is informed of the need to slow down by the indication of a "recommended" speed on the instrument panel or similar visual indications, or by means of a tactile signal on the accelerator pedal (such as vibration or an opposed reaction to the depression of the pedal).

If the driver's action is not satisfactory, or is not sufficient to avoid the indicated danger, the assistance systems can automatically actuate driving systems (such as the braking or steering system) of the vehicle, temporarily replacing the human action, to restore safe conditions.

Among the prior art, WO 2006/037691 discloses an improved lane departure warning method for assisting a driver, according to which an output signal is generated when a lane change of a vehicle is recognized, and the output signal is suppressed or reduced when the manoeuvre is deemed to be intentional. The method does not provide for detecting the actuation of a driving system of the vehicle as a reaction to a warning signal issued, and evaluate whether said actuation is adapted to restore a safe driving condition.

EP 1 531 112 discloses a driver assist system to support lane holding, arranged to initiate a warning in the event of an imminent hazardous situation. At least one actual vehicle state, represented by the state of the drive assist system, the state of an additional vehicle component and/or states of the vehicle environment, is taken into consideration for suppression of the warning.

In particular, the prior art driving assistance systems are limited to signalling an alert state to the driver if an anomalous, in other words potentially dangerous, driving condition is recognized, and if necessary they activate an autonomous action by the driving systems of the vehicle concerned, in the case of a critical scenario, to control the vehicle and restore the correct driving conditions.

However, a driver attempting to overcome the anomalous driving condition of which he has been warned is often unable to recognize whether his corrective manoeuvre is sufficient or insufficient to restore a correct driving condition, and he therefore runs the risk of executing an excessive manoeuvre (such as excessive deceleration), which can lead to further danger, or of executing an inadequate manoeuvre, which will finally result in the automatic actuation of the vehicle driving systems, if this is provided.

However, the automatic intervention of the vehicle driving systems requires the provision of a driving assistance system with sophisticated algorithms, which can control different vehicle driving systems in combination, and even this is not free of risk, since, although it provides a favourable resolution to a dangerous situation in most cases, it runs the risk of interfering with the driver's reactions and even of distracting his attention to driving when normal driving has been just resumed.

The object of the present invention is to provide a driving assistance system which can provide more accurate signalling to the driver in hazardous or anomalous driving conditions, while also avoiding the automatic actuation of the vehicle driving systems as far as possible.

According to the present invention, this object is achieved by means of a driving assistance system having the characteristics claimed in Claim 1.

Specific embodiments of the invention are described in the dependent claims.

Briefly, the present invention is based on the principle of supplementing the signalling provided to the driver by the driving assistance system with information on the adequacy or inadequacy of the driver's reaction.

Signalling the warning of the occurrence of an anomalous driving condition is accompanied by an auxiliary signal which, following the driver's modification of the driving condition, signals whether the aforesaid modification is adapted to cause (or has caused) the achievement of a correct driving condition, or whether it is insufficient for this purpose.

Preferably, the auxiliary signalling is carried out by means of a signalling device which is separate from that provided for signalling the anomalous driving condition, and adapted to assume at least two distinct signalling states, namely a signalling state indicating an insufficient corrective manoeuvre and a signalling state indicating a sufficient corrective manoeuvre.

The signalling device can be visual, acoustic or tactile ("haptic") .

In the currently preferred embodiment, it is of the visual type and comprises a single light-emitting source, such as a light-emitting diode (LED), which can be switched between states of different colours, such as red, yellow and green, to indicate, respectively, an anomalous driving condition, an incorrectly modified driving condition, and a correctly modified driving condition.

Further characteristics and advantages of the invention will be revealed more fully in the following detailed description, provided by way of example and without restrictive intent, with reference to the attached drawings, in which:
Figure 1 is a simplified block diagram of a driving assistance system according to the invention;
Figure 2 is a simplified schematic representation of a driving assistance system for maintaining the vehicle's position in a driving lane (Lane Departure Warning) according to the invention; and
Figure 3 is a flow diagram representing the operation of a driving assistance system according to the invention.

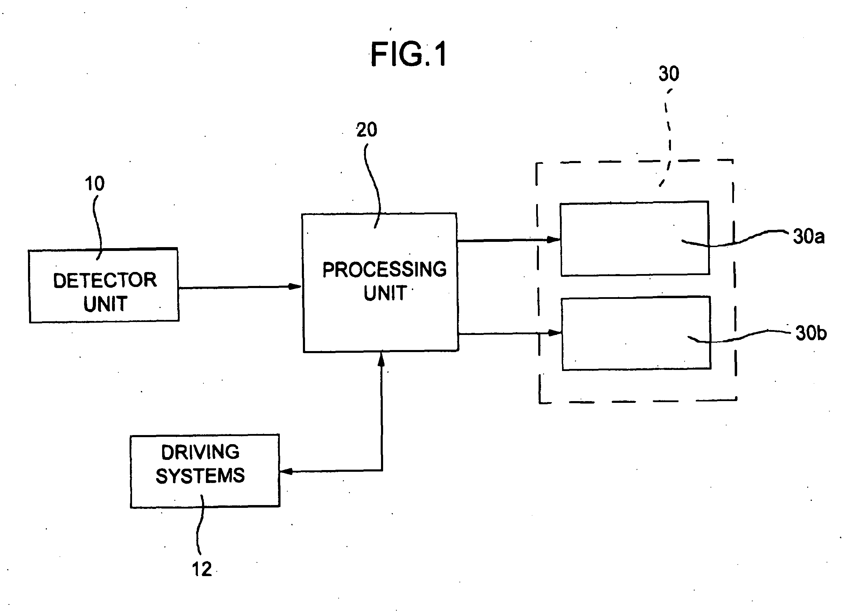

Figure 1 shows, in the simplified form of a block diagram, a driving assistance system according to the invention.

The number 10 indicates a driving conditions detector unit, including for example known sensors for detecting the driving conditions of the vehicle, and 12 generally indicates the driving systems, for example, but not exclusively, the vehicle's braking and steering system.

The detector unit 10 and the driving systems 12 are connected to and communicate with a processing unit 20 for managing the driving assistance system, connected to a signalling arrangement 30 comprising a pair of signalling devices 30a and 30b. The processing unit 20 can theoretically be integrated with other on-board electronic control units, for example in order to form a dedicated subsystem for monitoring the environment around the vehicle, which also makes use of signals sent from other sensors (vision, proximity, etc.) and which can use single specific strategies or strategies integrated on the basis of "data fusion" methods.

The sensors for detecting the driving conditions of a vehicle are, for example, imaging devices such as video cameras and the like, detection devices such as radar and the like, or even radio receivers adapted to acquire information on the environment around the vehicle, such as the presence, position and velocity of other nearby vehicles, or the configuration of the road infrastructure, in other words the geometry and division of the carriageway along which the vehicle is travelling, or the layout of intersecting roads.

The driving systems are connected to the processing unit 20 in a bidirectional mode, respectively by means of actuation sensors for supplying information to the processing unit on the driver's actuation of the systems, and by means of actuator devices for receiving commands from the processing unit and activating the driving systems correspondingly, for example in order to provide "haptic" feedback to the driver-vehicle interface devices of the driving systems (the steering wheel in a steering system, or the accelerator pedal in a braking system) or to control these system in automatic mode.

The signalling device 30a is a first signalling device which can assume an idle state in driving conditions recognized to be non-anomalous, in other words non-hazardous, and a warning state to signal to the driver an anomalous driving condition for which a manoeuvre or the actuation of a driving system of the vehicle is required.

The signalling device 30b is a second signalling device, which can assume at least a first signalling state when a modification of the driving condition occurring after the warning to the driver via the first signalling device 30a has not resulted in, or has been evaluated by the processing unit 20 as insufficient to result in the attainment of a correct driving condition, and a second signalling state when the aforesaid modification has resulted in, or has been evaluated by the processing unit 20 as sufficient to result in, the attainment of the correct driving condition.

In an alternative embodiment, the signalling arrangement 30 can however comprise a single signalling device, adapted to assume either the warning state or the different signalling states.

The system comprises sensors for actuating the driving system 12 which are adapted to determine a modification in the driving condition, and which are associated with the signalling arrangement and are adapted to detect an actuation of the driving systems when the signalling arrangement is in a warning state.

The processing unit 20 is adapted to estimate the driving conditions of the vehicle on the basis of the surrounding environment and/or the driver's actuation of a driving system of the vehicle, and in particular is programmed to check whether the change in the driving conditions after the signalling of an anomalous driving condition has resulted in the attainment of a correct driving condition or to determine (to estimate on the basis of predetermined algorithms) whether this change in the driving conditions is adapted to result in the immediate attainment of a correct driving condition.

If the outcome is negative, the processing unit commands the signalling device 30b to assume a first signalling state.

If the outcome is positive, the processing unit commands the signalling device 30b to assume a second signalling state, recognizably different from the first.

The first signalling state can coincide with the warning state, or is a hazard signalling state different from the warning state, for example a signalling state which is variable, continuously if necessary, from a first value, which can coincide with the warning state, to a second value, which at the limit can coincide with the second signalling state, if the driving conditions have been corrected.

The second signalling state can coincide with the idle state in which the device remains in non-anomalous driving conditions, or, alternatively, the second signalling state is a state signalling the absence of hazard but different from the idle state, and the signalling device can maintain this second signalling state for a predetermined period before switching to the idle state in which it remains in non-anomalous driving conditions.

Preferably, the signalling device is a visual signalling device, but can also be an acoustic signalling device or a tactile (so called "haptic") signalling device, or a combination of the foregoing types.

The signalling device 30b can comprise a single signal emitting source, which in a first embodiment can be switched between an active and an inactive state, while in a second embodiment it can be switched between intermittently active states having different frequencies of intermittency, and in a further embodiment it can be switched between states in which signals are emitted at different frequencies, or can comprise a plurality (array) of signal emitting sources of different frequencies which can be selectively activated.

In the preferred embodiment in which the signalling device is a visual signalling device, it comprises a light-emitting source, such as a light-emitting diode (LED), for example an RGB diode, or an arrangement of light-emitting sources of different colours.

Preferably, the different colours considered most suitable for the purpose are red, yellow and green, to represent hazard conditions of different degrees, or absence of hazard, in a similar way to traffic lights, which are identical in all countries and immediately understandable to the driver.

For example, the emission of the colour red would represent an anomalous driving condition unchanged from the time of the first warning, the emission of the colour yellow would indicate that the change in the driving condition due to the driver's reaction is not capable of bringing about a correct driving condition, and the emission of the colour green would indicate that the change in the driving condition due to the driver's reaction is capable of bringing about a correct driving condition.

An example of application of the invention is described below with reference to a driving assistance system for keeping a vehicle in the driving lane ("Lane Departure Warning").

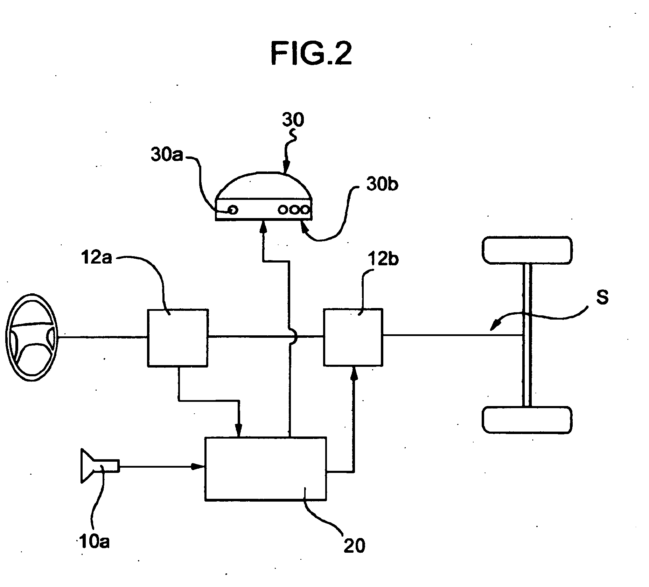

Figure 2 shows, in a simplified schematic representation, a driving assistance system of the Lane Departure Warning type, elements common to the representation in Figure 1 being indicated by identical or corresponding reference numerals.

A video camera of the unit 10 for detecting the driving conditions of a vehicle, adapted to the frontal capture of images of the driving lane along which the vehicle is travelling, is indicated with reference numeral 10a.

The video camera 10a is connected to an input of a processing unit 20 which can receive, at a second input, signals from a sensor 12a of the actuation of a steering system S of the vehicle, for example a steering angle sensor.

In turn, the processing unit 20 is connected at its output to a signalling arrangement 30, comprising a first indicator lamp 30a and a set of second indicator lamps 30b, which may for example be integrated in an instrument panel of the vehicle. It is also connected to a device 12b for actuating the steering system S of the vehicle.

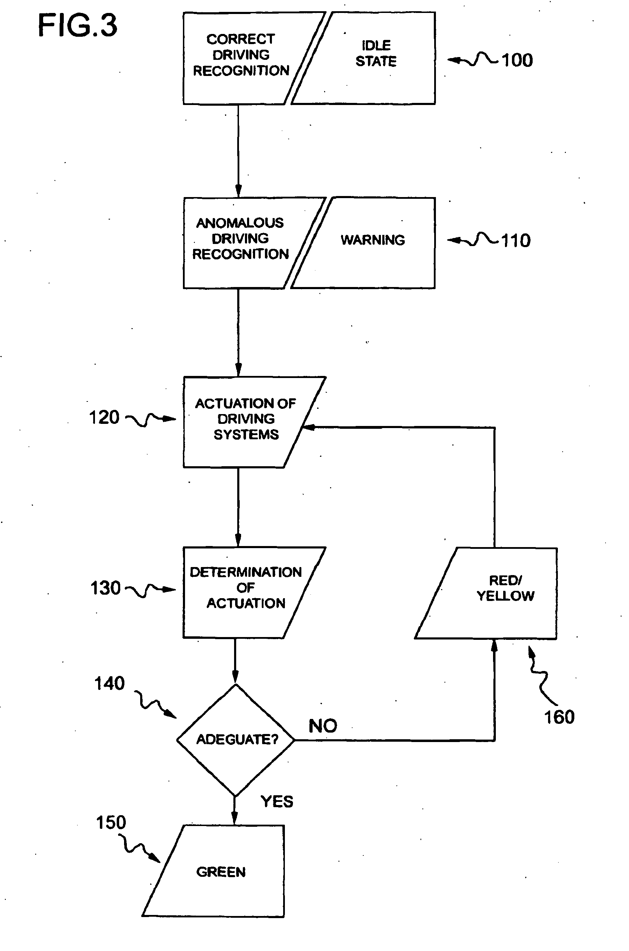

The operation of the system is described with reference to the flow diagram of Figure 3.

The images captured by the video camera 10a are supplied to the processing unit 20 which interprets them according to known algorithms used in lane tracking systems. If the vehicle remains within its delimited driving lane, correct driving conditions are recognized (step 100) and the signalling devices remain in their idle state, preferably disabled.

If the vehicle crosses the driving lane demarcation lines, or is estimated to be about to do so, and if it has been established that this crossing is unintentional because it has not been announced by the operation of the corresponding direction indicator, this is interpreted as an anomalous driving condition, and the processing unit causes the signalling device 30a to emit a warning signal indicating this condition (step 110).

If an anomalous driving condition is detected which has caused the activation of the warning signalling device 30a, the system sets itself to monitor the driver's reaction to the warning (step 120) by using the sensors 12a to detect any actuation of the steering system S, while checking whether the scenario around the vehicle (the road geometry) has changed, again by using the video camera 10a.

The processing unit is programmed to determine or estimate the driver's reaction (step 130) and to decide whether this is sufficient to restore the correct driving trajectory (step 140), for example by calculating a new trajectory on the basis of a reading of the steering angle established by means of the steering wheel.

If necessary, the system can also be designed at the same time to act on the steering system S by means of the actuator device 12b, for example in order to supply a "haptic" feedback to the steering wheel designed to cause the correction of the driving trajectory in an intuitive way.

If the driver reacts, the processing unit operates the indicator lamps 30b to indicate to the driver whether his manoeuvre is adequate, by illuminating the green lamp (step 150) or, similarly, in the case of an RGB LED, by driving the diode in such a way that green light is emitted.

If the actuation is not considered adequate, the processing unit operates the indicator lamps 30b to illuminate the yellow lamp (or, similarly, in the case of an RGB LED, it drives the diode in such a way that it emits amber light) or the red lamp (or, similarly, in the case of an RGB LED, it drives the diode in such a way that it emits red light) (step 160). The information is updated at time intervals dependent on the operating frequencies of the system.

When the correct driving condition is reached, and the green signal is accordingly emitted, the signalling device maintains this signalling for a predetermined period before switching to the idle (inactive) state in which it remains in a non-anomalous driving condition.

Additionally, in an improved embodiment, if the anomalous driving condition persists, it is possible for the processing unit to control the steering system S autonomously, by means of the same or other actuator devices, effectively replacing the driver to carry out the appropriate operations for driving the vehicle, after the expiry of a predetermined time period in which the driver's voluntary reaction is awaited.

Clearly, provided that the principle of the invention is retained, the forms of embodiment and the details of production can be varied considerably from what has been described and illustrated purely by way of example and without restrictive intent, without departure from the scope of protection of the present invention as defined by the attached claims.

This is particularly true of applications of the principles of the invention to different driving assistance systems, for example other lateral driving support systems such as lane change support systems, or support systems for the longitudinal monitoring of the vehicle, such as support systems for maintaining a safe distance and support systems for collision prevention.

## Claims

1. Driving assistance system for a vehicle, comprising
- processing means (20) for estimating the driving conditions of the vehicle on the basis of the surrounding environment;
- a signalling arrangement (30) adapted to assume a warning state to signal to the driver an anomalous driving condition requiring a manoeuvre or the actuation of a driving system of the vehicle; and
- means (10; 10a) for detecting an actuation of at least one driving system of the vehicle, associated with the said signalling arrangement (30),
**characterized in that** said means (10; 10a) for detecting an actuation of at least one driving system are adapted to detect an actuation of a driving system of the vehicle when the signalling arrangement (30) is in a warning state, and
**in that** the processing means (20) are arranged for estimating the driving conditions of the vehicle on the basis of the actuation of a driving system of the vehicle (12) by the driver, and causing a signalling device (30b) of the said arrangement (30) to assume a first signalling state when the aforesaid actuation is not adapted to result in the attainment of a correct driving condition, and a second signalling state when the aforesaid actuation is adapted to result in the attainment of a correct driving condition.

2. System according to Claim 1, in which the said signalling arrangement (30) comprises a single signalling device, which is adapted to assume the said warning state and the said signalling states.

3. System according to Claim 1, in which the said signalling arrangement (30) comprises separate signalling devices (30a, 30b), namely a first device (30a) adapted to assume the said warning state and at least a second device (30b) adapted to assume the said signalling states.

4. System according to any one of the preceding claims, in which the first signalling state coincides with the warning state.

5. System according to any one of Claims 1 to 4, in which the first signalling state is a danger indication state which is different from the warning state.

6. System according to Claim 5, in which the first signalling state is a signalling state which is continuously variable from a first value to a second value, the said second value coinciding with the second signalling state.

7. System according to any one of the preceding claims, in which the second signalling state coincides with an idle state in which the said device (30b) remains in non-anomalous driving conditions.

8. System according to any one of Claims 1 to 6, in which the second signalling state is a state of signalling the absence of danger, the signalling device (30b) being adapted to maintain the said second signalling state for a predetermined time period before switching to an idle state in which it remains in non-anomalous driving conditions.

9. System according to any one of the preceding claims, in which the signalling device (30b) is a visual signalling device.

10. System according to any one of Claims 1 to 8, in which the signalling device is an acoustic signalling device.

11. System according to any one of Claims 1 to 8, in which the signalling device is a tactile signalling device.

12. System according to Claim 9, in which the signalling device comprises a single signal-emitting source, which can be switched between an active state and an inactive state.

13. System according to Claim 9, in which the signalling device comprises a single signal-emitting source, which can be switched between intermittently active states having different frequencies of intermittency.

14. System according to Claim 9, in which the signalling device comprises a single signal-emitting source, which can be switched between states having different signal frequencies.

15. System according to Claim 9, in which the signalling device comprises a plurality of signal-emitting sources having different frequencies, which can be activated selectively.

16. System according to Claim 14 or 15, in which the signalling device can emit light of different colours.

17. System according to Claim 16, in which the said colours are red, yellow and green.

18. System according to Claim 16, in which the said signal-emitting source is a light-emitting diode.

19. System according to any one of the preceding claims,
**characterized in that** it is a lateral driving support system.

20. System according to Claim 19, **characterized in that** it is a support system for keeping the driving lane.

21. System according to Claim 19, **characterized in that** it is a support system for lane changing manoeuvres.

22. System according to any one of Claims 1 to 18, **characterized in that** it is a longitudinal monitoring support system.

23. System according to Claim 22, **characterized in that** it is a support system for maintaining a safe distance.

24. System according to Claim 22, **characterized in that** it is an anti-collision support system.

## Patentansprüche

1. Fahrhilfssystem für ein Kraftfahrzeug, umfassend
• Verarbeitungsmittel (20) zur Einschätzung der Fahrbedingungen des Kraftfahrzeugs auf Grundlage der umliegenden Umgebung;
• eine Signalanordnung (30), die geeignet ist, einen Warnzustand anzunehmen, um dem Fahrer eine abnorme Fahrbedingung zu signalisieren, die ein Manöver oder die Betätigung eines Fahrsystems des Kraftfahrzeugs erforderlich macht; und
• Mittel (10; 10a) zur Erkennung einer Betätigung von zumindest einem Fahrsystem des Kraftfahrzeugs, verbunden mit der Signaleinrichtung (30),
**dadurch gekennzeichnet,**
**dass** die Mittel (10; 10a) zur Erkennung einer Betätigung von zumindest einem Fahrsystem geeignet sind, eine Betätigung eines Fahrsystems des Kraftfahrzeugs zu erkennen, wenn sich die Signalanordnung (30) in einem Warnzustand befindet, und
**dass** die Verarbeitungsmittel (20) angeordnet sind zur Einschätzung der Fahrbedingungen des Kraftfahrzeugs auf der Grundlage der Betätigung eines Fahrsystems des Kraftfahrzeugs (12) durch den Fahrer, und eine Signaleinheit (30b) der Anordnung (30) veranlassen, einen ersten Signalzustand anzunehmen, wenn die Betätigung nicht geeignet ist, in der Erreichung eines korrekten Fahrzustands zu resultieren, und einen zweiten Signalzustand, wenn die zuvor genannte Betätigung geeignet ist, in der Erreichung eines korrekten Fahrzustands zu resultieren.

2. Fahrsystem nach Anspruch 1,
**dadurch gekennzeichnet,**
**dass** die Signalanordnung (30) eine einzige Signaleinheit umfasst, die geeignet ist den Warnzustand und die Signalzustände anzunehmen.

3. Fahrsystem nach Anspruch 1,
**dadurch gekennzeichnet,**
**dass** die Signalanordnung (30) getrennte Signaleinheiten (30a, 30b) umfasst, nämlich eine erste Einheit (30a), die geeignet ist, den Warnzustand anzunehmen, und zumindest eine zweite Einheit (30b), die geeignet ist, die Signalzustände anzunehmen.

4. System nach einem der vorherigen Ansprüche,
**dadurch gekennzeichnet,**
**dass** sich der erste Signalzustand mit dem Warnzustand deckt.

5. System nach einem der Ansprüche 1 bis 4,
**dadurch gekennzeichnet,**
**dass** der erste Signalzustand ein Gefahrenhinweiszustand ist, der sich vom Warnzustand unterscheidet.

6. System nach Anspruch 5,
**dadurch gekennzeichnet,**
**dass** der erste Signalzustand ein Signalzustand ist, der von einem ersten Wert zu einem zweiten Wert durchgehend variabel ist, wobei der zweite Wert mit dem zweiten Signalzustand zusammentrifft.

7. System nach einem der vorherigen Ansprüche,
**dadurch gekennzeichnet,**
**dass** sich der zweite Signalzustand mit einem Ruhezustand deckt, in welchem die Einheit (30b) in unabnormen Fahrzuständen verbleibt.

8. System nach einem der Ansprüche 1 bis 6,
**dadurch gekennzeichnet,**
**dass** der zweite Signalzustand ein das Fehlen von Gefahr signalisierender Zustand ist, wobei die Signaleinheit (30b) geeignet ist, vor dem Umschalten in den Ruhezustand, in welchem sie in unabnormen Fahrzuständen verbleibt, den zweiten Signalzustand für eine vorbestimmte Zeitspanne aufrechtzuerhalten.

9. System nach einem der vorherigen Ansprüche,
**dadurch gekennzeichnet,**
**dass** die Signaleinheit (30b) eine visuelle Signaleinheit ist.

10. System nach einem der Ansprüche 1 bis 8,
**dadurch gekennzeichnet,**
**dass** die Signaleinheit eine akustische Signaleinheit ist.

11. System nach einem der Ansprüche 1 bis 8,
**dadurch gekennzeichnet,**
**dass** die Signaleinheit eine taktile Signaleinheit ist.

12. System nach Anspruch 9,
**dadurch gekennzeichnet,**
**dass** die Signaleinheit eine einzige signalabgebende Quelle umfasst, die umgeschaltet werden kann zwischen einem aktiven Zustand und einem inaktiven Zustand.

13. System nach Anspruch 9,
**dadurch gekennzeichnet,**
**dass** die Signaleinheit eine einzige signalabgebende Quelle umfasst, die umgeschaltet werden kann zwischen periodisch aktiven Zuständen mit verschiedenen Frequenzen der Periodizität.

14. System nach Anspruch 9,
**dadurch gekennzeichnet,**
**dass** die Signaleinheit eine einzige signalabgende Quelle umfasst, die umgeschaltet werden kann zwischen Zuständen mit verschiedenen Signalfrequenzen.

15. System nach Anspruch 9,
**dadurch gekennzeichnet,**
**dass** die Signaleinheit eine Vielzahl von signalabgebenden Quellen mit verschiedenen Frequenzen umfasst, die selektiv aktiviert werden können.

16. System nach Anspruch 14 oder 15,
**dadurch gekennzeichnet,**
**dass** die Signaleinheit Licht verschiedener Farben emittieren kann.

17. System nach Anspruch 16,
**dadurch gekennzeichnet,**
**dass** die Farben Rot, Gelb und Grün sind.

18. System nach Anspruch 16,
**dadurch gekennzeichnet,**
**dass** die signalabgebende Quelle eine lichtemittierende Diode ist.

19. System nach einem der vorherigen Ansprüche,
**dadurch gekennzeichnet,**
**dass** es sich um ein quer antreibendes Hilfssystem handelt.

20. System nach Anspruch 19,
**dadurch gekennzeichnet,**
**dass** es sich um ein Hilfssystem zur Beibehaltung der Fahrspur handelt.

21. System nach Anspruch 19,
**dadurch gekennzeichnet,**
**dass** es sich um ein Hilfssystem für Spurwechselmanöver handelt.

22. System nach einem der Ansprüche 1 bis 18,
**dadurch gekennzeichnet,**
**dass** es sich um ein in Längsrichtung überwachendes Hilfssystem handelt.

23. System nach Anspruch 22,
**dadurch gekennzeichnet,**
**dass** es sich um ein Hilfssystem zur Einhaltung eines Sicherheitsabstands handelt.

24. System nach Anspruch 22,
**dadurch gekennzeichnet,**
**dass** es sich um ein Anti-Kollisionshilfssystem handelt.

## Revendications

1. Système d'aide à la conduite pour un véhicule, comportant des moyens de traitement (20) pour évaluer les conditions de conduite du véhicule sur la base du milieu environnant ;
- un mode de signalisation (30) apte à prendre son état d'avertissement pour signaler au conducteur toute condition de conduite anomale exigeant une manoeuvre ou le déclenchement d'un système de conduite du véhicule ; et
- des moyens (10 ; 10a) pour détecter un déclenchement d'au moins un système de conduite du véhicule, associé au mode de signalisation (30) susdit,
**caractérisé en ce que** les moyens (10 ; 10a) susdits pour détecter un déclenchement d'au moins un système de conduite sont aptes à détecter un déclenchement d'un système de conduite du véhicule aussitôt que le mode de signalisation (30) soit dans son état d'avertissement, et
**en ce que** les moyens de traitement (20) sont organisés de façon à évaluer les conditions de conduite du véhicule sur la base du déclenchement d'un système de conduite du véhicule (12) par le conducteur, et à entraîner le dispositif de signalisation (30b) du mode (30) susdit à prendre son premier état de signalisation aussitôt que la situation susmentionnée ne s'avère pas apte à aboutir à l'atteinte d'une condition de conduite correcte, et son second état de signalisation aussitôt que la situation susmentionnée s'avère apte à aboutir à l'atteinte d'une condition de conduite correcte.

2. Système selon la revendication 1, **caractérisé en ce que** le mode de signalisation (30) susdit comporte un dispositif de signalisation individuel, qui est apte à prendre l'état d'avertissement susdit et les états de signalisation susdits.

3. Système selon la revendication 1, **caractérisé en ce que** le mode de signalisation (30) susdit comporte des dispositifs de signalisation détachés (30a, 30b), à savoir un premier dispositif (30a) apte à prendre l'état d'avertissement susdit et au moins un second dispositif (30b) apte à prendre les états de signalisation susdits.

4. Système selon n'importe quelle des revendications précédentes, **caractérisé en ce que** le premier état de signalisation coïncide avec l'état d'avertissement.

5. Système selon n'importe quelle des revendications 1 à 4, **caractérisé en ce que** le premier état de signalisation est un état d'indication de danger qui est différent par rapport à l'état d'avertissement.

6. Système selon la revendication 5, **caractérisé en ce que** le premier état de signalisation est un état de signalisation qui varie en continu d'une première valeur à une seconde valeur, la seconde valeur susdite coïncidant avec le second état de signalisation.

7. Système selon n'importe quelle des revendications précédentes, **caractérisé en ce que** le second état de signalisation coïncide avec un état de repos où le dispositif (30b) susdit reste sous des conditions de conduite non anomales.

8. Système selon n'importe quelle des revendications 1 à 6, **caractérisé en ce que** le second état de signalisation est un état de signalisation de l'absence de danger, le dispositif de signalisation (30b) étant apte à maintenir le second état de signalisation susdit pendant un laps de temps prédéterminé avant de passer à son état de repos où il reste sous des conditions de conduite non anomales.

9. Système selon n'importe quelle des revendications précédentes, **caractérisé en ce que** le dispositif de signalisation (30b) est un dispositif de signalisation visuel.

10. Système selon n'importe quelle des revendications 1 à 8, **caractérisé en ce que** le dispositif de signalisation est un dispositif de signalisation acoustique.

11. Système selon n'importe quelle des revendications 1 à 8, **caractérisé en ce que** le dispositif de signalisation est un dispositif de signalisation tactile.

12. Système selon la revendication 9, **caractérisé en ce que** le dispositif de signalisation comporte une source d'émission de signaux individuelle, qui peut être commutée de son état actif vers son état inactif.

13. Système selon la revendication 9, **caractérisé en ce que** le dispositif de signalisation comporte une source d'émission des signaux individuelle, qui peut être commutée vers plusieurs états actifs de façon intermittente ayant de différentes fréquences d'intermittence.

14. Système selon la revendication 9, **caractérisé en ce que** le dispositif de signalisation comporte une source d'émission de signaux individuelle, qui peut être commutée vers plusieurs états ayant de différentes fréquences de signaux.

15. Système selon la revendication 9, **caractérisé en ce que** le dispositif de signalisation comporte une pluralité de sources d'émission de signaux ayant de différentes fréquences, qui peuvent être activées sélectivement.

16. Système selon la revendication 14 ou 15, **caractérisé en ce que** le dispositif de signalisation peut émettre une lumière ayant de différentes couleurs.

17. Système selon la revendication 16, **caractérisé en ce que** les couleurs susdites sont rouge, jaune et vert.

18. Système selon la revendication 16, **caractérisé en ce que** la source d'émission des signaux susdite est une diode d'émission de lumière.

19. Système selon n'importe quelle des revendications précédentes, **caractérisé en ce que** c'est un système d'aide à la conduite latéral.

20. Système selon la revendication 19, **caractérisé en ce que** c'est un système d'aide à la tenue de route.

21. Système selon la revendication 19, **caractérisé en ce que** c'est un système d'aide au manoeuvres de changement de route.

22. Système selon n'importe quelle des revendications 1 à 18, **caractérisé en ce que** c'est un système d'aide à la surveillance longitudinal.

23. Système selon la revendication 22, **caractérisé en ce que** c'est un système d'aide à la tenue de la distance de sécurité.

24. Système selon la revendication 22, **caractérisé en ce que** c'est un système d'aide anticollision.
